Europäisches Patentamt

(19) European Patent Office    (11) Numéro de publication: **0 069 008**
A2

Office européen des brevets

(12)

# DEMANDE DE BREVET EUROPEEN

(21) Numéro de dépôt: **82401142.3**      (51) Int. Cl.³: **G 01 F 1/32**, G 01 N 9/32

(22) Date de dépôt: **22.06.82**

---

(30) Priorité: **30.06.81 FR 8112859**

(43) Date de publication de la demande: **05.01.83**
*Bulletin 83/1*

(84) Etats contractants désignés: **DE FR GB IT NL**

(71) Demandeur: **SOCIETE DE PROSPECTION ELECTRIQUE SCHLUMBERGER, 42, rue Saint-Dominique, F-75340 Paris Cedex 07 (FR)**

(84) Etats contractants désignés: **FR IT**

(71) Demandeur: **Schlumberger Limited, 277 Park Avenue, New York, N.Y. 10172 (US)**

(84) Etats contractants désignés: **DE GB NL**

(72) Inventeur: **Hulin, Jean-Pierre, François, 10bis, rue de la Trémouille, F-94100 Saint Maur des Fossés (FR)**

(74) Mandataire: **Hagel, Francis, Service Brevets ETUDES ET PRODUCTIONS SCHLUMBERGER B.P. 202, F-92142 Clamart Cedex (FR)**

---

(54) **Procédé et dispositif pour détérminer les caractéristiques d'écoulement d'un fluide dans un puits.**

(57)      Procédé pour mesurer le débit d'un fluide dans un puits au moyen d'une sonde de diagraphie comprenant un obstacle générateur de tourbillons et un capteur de pression qui, en réponse aux variations de pression dues à l'émission de tourbillons, fournit un signal de détection ayant une composante utile dont on détermine la fréquence f.

On forme le rapport Ar de l'amplitude A du signal à la fréquence f et on détermine le débit à partir du rapport Ar et de la fréquence f sur la base d'une première relation donnant f en fonction du débit Q et de la proportion de bulles Y, cette relation incluant une relation linéaire entre f et Q, et d'une seconde relation exprimant la variation du rapport Ar en fonction de Y et de Q.

## PROCEDE ET DISPOSITIF POUR DETERMINER LES CARACTERISTIQUES D'ECOULEMENT D'UN FLUIDE DANS UN PUITS

La présente invention concerne un procédé et un dispositif pour déterminer les caractéristiques d'écoulement d'un fluide s'écoulant dans un puits, en particulier un puits producteur de pétrole.

On sait depuis longtemps que si l'on place un obstacle de forme appropriée en travers d'un écoulement monophasique, des tourbillons sont émis alternativement d'un côté et de l'autre de l'obstacle avec une fréquence f proportionnelle à la vitesse d'écoulement. C'est le phénomène dit des allées de tourbillons de Karman. En détectant le passage des tourbillons, on peut donc déterminer le débit de fluide.

Les caractéristiques des débitmètres fonctionnant selon ce principe sont énumérées dans l'article de R.S. Medlock "The Vortex Flowmeter – Its Development and Characteristics" paru dans Australian Journal of Instrumentation and Control, avril 1976, pages 31-32. Au nombre des avantages, on peut citer, entre autres, la plage de mesure étendue (100 : 1), l'absence totale de pièces mobiles, et la simplicité de calibration.

Ces avantages sont particulièrement précieux lorsqu'il s'agit de mesurer le débit dans un puits d'hydrocarbures, à l'aide d'une sonde suspendue à un câble de transmission. Une sonde à émission de tourbillons adaptée à ces conditions de mesure très spécifiques fait l'objet de la demande de brevet français No. 80.26875 déposée le 18 décembre 1980. Cette sonde comprend, en tant que transducteur sensible au passage des tourbillons, un transducteur de pression.

2

0069008

Toutefois, le fait que le fluide produit par un puits de pétrole contienne souvent une certaine proportion de gaz soulève une difficulté.

En effet, on a constaté que dans le cas d'un mélange gaz-liquide, la relation de proportionalité entre le débit de liquide Q et la fréquence f est modifiée en ce sens que le rapport f/Q augmente quelque peu avec la proportion de bulles Y.

La connaissance au moins approximative de la proportion de bulles est donc nécessaire pour déterminer le débit avec une précision satisfaisante.

Il faut ajouter que la proportion de bulles constitue en elle-même une information intéressante. La mesure de cette proportion aux différentes profondeurs permet de détecter le point de bulles, c'est-à-dire le niveau à partir duquel la réduction de la pression hydrostatique permet au gaz, jusque là dissous dans le liquide, de commencer à former une phase distincte.

On sait, par exemple par le brevet US 4 169 376, que l'amplitude du signal issu d'un transducteur de pression associé à un obstacle générateur de tourbillons est, dans le cas d'un fluide monophasique, proportionnelle à la densité du fluide et au carré du débit. Si l'on traite le signal pour éliminer la dépendance de l'amplitude vis-à-vis du débit, on obtient une amplitude réduite Ar qui est proportionnelle à la densité du fluide. Mais par elle-même, une telle dépendance implique plutôt une faible sensibilité de l'amplitude à la présence de bulles. En effet, en présence de bulles, la densité moyenne du fluide diminue, mais la diminution relative est du même ordre de grandeur que la proportion de bulles, et en fait légèrement inférieure, car la densité du gaz n'est pas tout à fait négligeable dans les conditions du puits.

Le procédé selon la revendication 1 résout le problème posé de façon inattendue au regard de l'état de la technique.

L'invention repose sur la découverte qu'une augmentation donnée de la proportion de bulles a pour effet une diminution beaucoup plus importante de l'amplitude réduite Ar.

Cet effet d'amplification très accusé - le " gain" pouvant atteindre une valeur d'environ 7 à 8 - trouve son origine dans le fait que les bulles de gaz se trouvent "piégées" par les tourbillons. En d'autres termes, la proportion de bulles dans les tourbillons est nettement supérieure à la proportion moyenne de bulles dans le fluide. Il en résulte que la densité locale dans le sillage de l'obstacle est nettement inférieure à la densité moyenne, ce qui explique la dépendance accentuée de l'amplitude réduite vis-à-vis de la proportion de bulles.

On a constaté par ailleurs que les variations de l'amplitude réduite dépendent quelque peu du débit à partir d'une certaine valeur de Y, la décroissance étant plus rapide aux débits élevés.

La seconde relation utilisée selon l'invention exprime cette dépendance de l'amplitude réduite vis-à-vis de la proportion de bulles et du débit.

L'invention sera bien comprise à la lecture de la description ci-après, faite en référence aux dessins annexés.

Dans les dessins :

- la figure 1 représente une sonde de diagraphie pour la mesure du débit dans un puits d'hydrocarbures;

- la figure 2 montre en perspective, à plus grande échelle, la partie centrale de la sonde de la figure 1;

- la figure 3 est une coupe transversale prise selon le plan III-III de la figure 2;

- la figure 4 montre, sous forme de schéma-blocs, l'électronique de fond incorporée à la sonde de la figure 1 et l'équipement de surface associé;

- la figure 5 est un diagramme indiquant les opérations effectuées par le calculateur de l'équipement de surface;

- la figure 6 est un graphique montrant la variation du rapport f/Q (fréquence de la composante utile du signal de détection/débit de liquide) en fonction de la proportion de bulles Y;

- la figure 7 illustre le piégeage des bulles de gaz dans les tourbillons;

- la figure 8 montre une série de courbes illustrant la variation, pour un débit donné, de l'amplitude réduite Ar en fonction de la proportion de gaz Y.

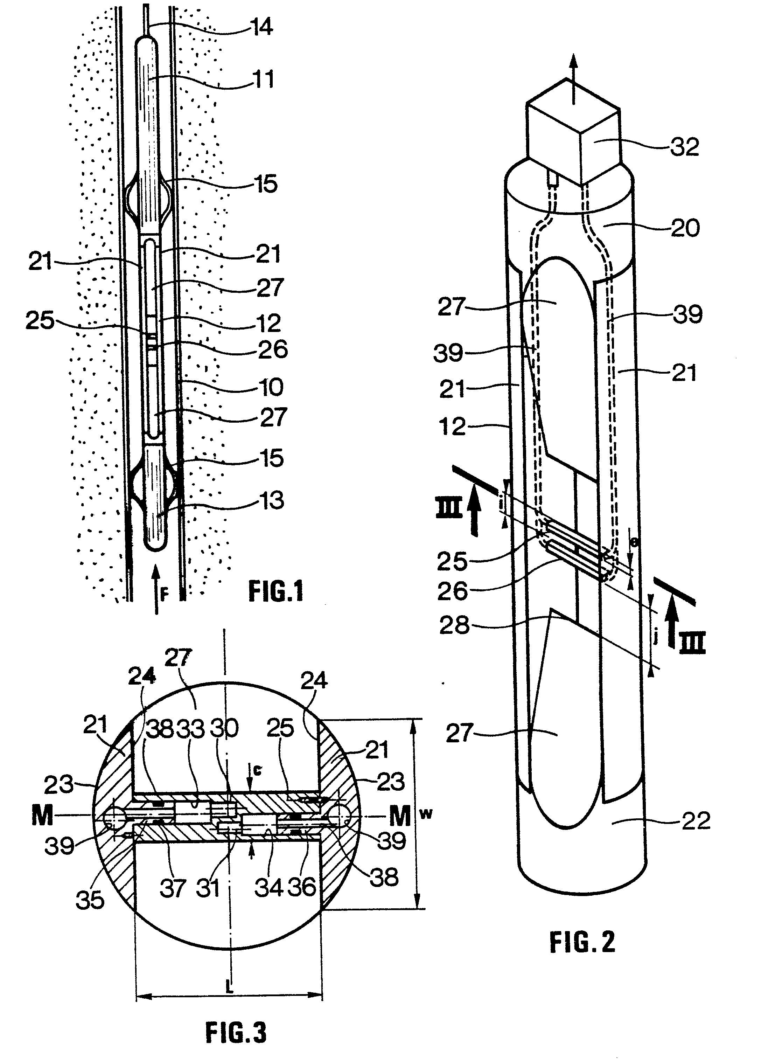

La figure 1 représente une sonde adaptée à la mesure du débit dans un puits 10. Le puits 10 est un puits producteur d'hydrocarbures dans lequel le fluide circule dans le sens ascendant représenté par la flèche F.

La sonde, de section généralement circulaire, comprend une partie supérieure 11, une partie centrale 12 et une partie inférieure 13 fixées rigidement bout à bout. La partie centrale 12 qu'on va décrire en détail ci-après sert à créer des allées de tourbillons et à détecter le passage de ces tourbillons. La partie supérieure 11 est suspendue à un câble 14 qui relie mécaniquement et électriquement la sonde à un équipement de surface, non représenté sur la figure 1. Cet équipement de surface comprend de façon classique un treuil pour l'enroulement et le déroulement du câble 14 et des moyens de traitement et d'enregistrement de signaux dont les particularités seront décrites ci-après.

La partie supérieure 11 contient un transducteur qui produit un signal de détection et des circuits qui traitent ce signal en vue de sa transmission par le câble 14.

La partie inférieure 13 agit par son poids propre pour faciliter la descente de la sonde dans le puits contre la pression du fluide.

Des organes de centrage 15 sont fixés respectivement sur la partie supérieure 11 et sur la partie inférieure 13, de façon symétrique par rapport à la partie centrale 12. Ces organes de centrage sont classiques dans les dispositifs de diagraphie et il n'y a pas lieu de les décrire en détail ici. Ils assurent le centrage de la sonde par rapport à la paroi cylindrique du puits - tubage ou colonne de production - de manière que la vitesse d'écoulement que l'on mesure soit bien la vitesse dans la zone centrale d'écoulement.

La partie centrale 12 est représentée à plus grande échelle sur la figure 2, et la figure 3 en montre une coupe transversale.

La partie centrale comprend une pièce d'extrémité supérieure 20 à laquelle sont fixés deux longerons parallèles 21 dirigés selon l'écoulement, aux extrémités opposées desquels est fixée une pièce d'extrémité inférieure 22. Les parties supérieure 11 et inférieure 13 sont respectivement fixées aux pièces d'extrémité 20 et 22. La fixation entre les longerons 21 et les pièces d'extrémité est assurée par tout moyen approprié, par exemple par des vis non représentées.

Les pièces d'extrémité 20 et 22 ont une section circulaire de diamètre D et les parois extérieures 23 des longerons 21 constituent des secteurs circulaires de même diamètre D exactement alignés sur les pièces d'extrémité.

En revanche, les longerons présentent des parois intérieures 24 planes et parallèles, séparées par une distance L valant environ 0,7 D, D étant défini comme ci-dessus. La largeur w des parois intérieures 24, c'est-à-dire leur dimension transversale à l'écoulement, est du même ordre que la distance L.

Entre les longerons 21 sont fixés deux éléments allongés 25, 26 générateurs de tourbillons, appelés ci-après obstacles. Les obstacles 25, 26 ont des sections rectangulaires identiques. Ils sont placés perpendiculairement aux parois intérieures 24 et symétriquement par rapport au plan médian M des parois 24 qui est parallèle à l'écoulement.

Les proportions appropriées pour les obstacles 25, 26 sont les suivantes : le rapport entre la largeur frontale c (largeur de la face rectangulaire transversale à l'écoulement) et la longueur de chaque obstacle, égale à la distance L entre les parois 24, est compris entre 0,20 et 0,40 et le rapport entre la largeur frontale c et l'épaisseur e (largeur des faces parallèles à l'écoulement) vaut environ 3/2.

L'agencement à deux obstacles assure de façon connue une émission de tourbillons plus forte qu'un obstacle unique. De façon appropriée, l'intervalle i entre les arêtes supérieures des obstacles 25 et 26 est de l'ordre de 5 c, c étant la largeur frontale susmentionnée.

Chacune des pièces d'extrémité 20, 22 se prolonge en direction des obstacles 25, 26 par un profilé en coin 27 qui s'étend entre les longerons 21. Dans la réalisation représentée, les profilés 27 constituent un ensemble symétrique par rapport aux obstacles 25, 26.

Chaque profilé 27 a une section triangulaire et s'amincit à partir de la pièce d'extrémité respective, de section circulaire, jusqu'à une arête 28 parallèle aux obstacles 25, 26 et située dans le plan médian M des parois 24 des longerons. Les arêtes 28 sont situées à une distance j de l'obstacle adjacent, sensiblement égale au double de l'intervalle i entre obstacles.

Les profilés 27 servent à minimiser les turbulences parasites dues au décollement de couche limite sur la pièce d'extrémité située en amont des obstacles, la pièce inférieure 22 dans le cas présent. Un angle d'environ 5° entre chaque face d'un profilé 27 et de la pièce d'extrémité correspondante assure une réduction appropriée des turbulences tout en évitant d'allonger excessivement la partie centrale 12. Ceci revient à un angle au sommet d'environ 10° pour les profilés 27.

La détection du passage des tourbillons qui sont émis alternativement d'un côté et de l'autre de l'obstacle 25 est assurée par deux orifices de prise de pression 30,31 débouchant sur les faces opposées, parallèles à l'écoulement, de l'obstacle 25. Ces deux orifices sont reliés à un transducteur de pression différentielle 32 représenté schématiquement sur la figure 2 et logé, comme on l'a dit plus haut, dans la partie supérieure 11. Le transducteur 32 peut être un transducteur magnétique à réluctance variable tel que le modèle DP9 de la société Validyne de Northridge, Californie, Etats-Unis d'Amérique.

7  0069008

Dans l'exemple représenté, la liaison entre les orifices 30, 31 et le transducteur 32 est réalisée de la façon suivante.

L'obstacle 25 comprend deux alésages 33, 34 dirigés suivant sa longueur et formés à partir de ses extrémités opposées. Les alésages 33, 34 se prolongent par des parties de plus petit diamètre qui communiquent respectivement avec les orifices 30, 31. Les alésages 33, 34 permettent également d'emboîter l'obstacle sur deux tétons 35, 36 formés ou fixés respectivement sur les longerons 21, chaque téton recevant un joint d'étanchéité 37 dans une gorge. Les tétons sont percés de trous centraux 38 qui mettent en communication respectivement les alésages 33, 34 avec des conduits 39 formés dans les longerons 21 et dans la pièce d'extrémité supérieure 20, et reliés au capteur 32.

L'obstacle amont 26 est assemblé de la même manière que l'obstacle 25 sur des tétons liés aux longerons 21.

L'adaptation à la mesure dans un puits injecteur implique que les obstacles 25 et 26 puissent échanger leurs rôles. A cet effet, les conduits 39 se prolongent jusqu'à l'obstacle 26, comme le montre la figure 2, et on utilise des obstacles de forme identique, les orifices de l'obstacle amont étant obturés au moyen de bouchons démontables de sorte que seuls ceux de l'obstacle aval servent de prises de pression.

En ce qui concerne le transducteur 32, il faut noter qu'il est placé à l'intérieur d'une chambre remplie de fluide inerte, mise en équilibre de pression avec le fluide du puits par un piston de compensation. Cet agencement est classique dans les sondes de diagraphie pour puits d'hydrocarbures et il est inutile de le décrire ici plus en détail. Il évite au transducteur d'avoir à supporter la pression élevée du fluide du puits, sans changer le résultat de la mesure. Celle-ci porte en effet sur la différence entre les pressions prélevées sur les faces opposées de l'obstacle.

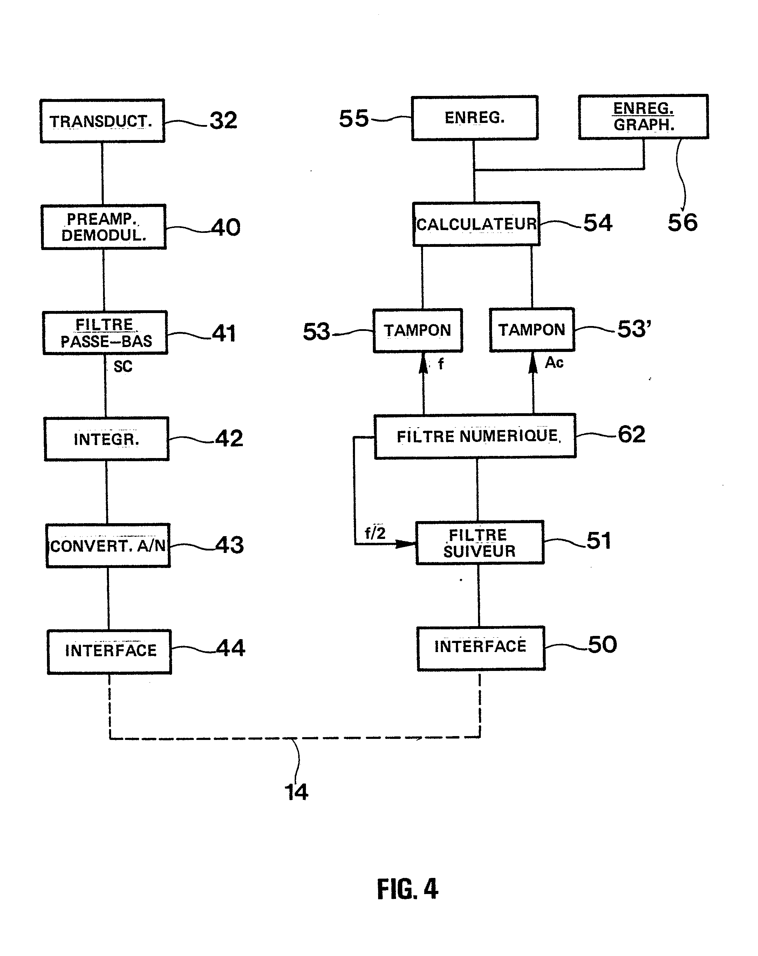

La figure 4 représente sous forme de schéma-blocs l'électronique logée dans la partie supérieure 11 et les moyens de traitement de l'équipement de surface.

Le transducteur 32 reçoit un signal d'excitation de fréquence constante qui est modulé en amplitude par les variations de la grandeur mesurée, à savoir la différence entre les pressions sur les faces opposées, parallèles à l'écoulement, de l'obstacle aval. Un bloc de préamplification et de démodulation 40 est associé au transducteur 32 et délivre un signal composite dont la composante utile a une fréquence f égale à la fréquence d'émission des tourbillons à partir d'une face donnée de l'obstacle.

Dans le cas d'un fluide monophasique, cette fréquence est proportionnelle à la vitesse d'écoulement apparente V "vue" par la sonde, égale à la vitesse d'écoulement réelle diminuée de la vitesse de déplacement propre de la sonde.Le rapport f/V est donc constant. Dans le cas d'un mélange liquide-gaz,il augmente légèrement, comme on le verra, avec la proportion de gaz.

Par ailleurs, comme le transducteur 32 est un transducteur de pression, l'amplitude A de la composante utile de ce signal dépend de la pression locale et est donc proportionnelle d'une part à la densité d du fluide, et d'autre part au carré de la vitesse V.

Le fait que l'amplitude du signal issu du bloc 40 soit proportionnelle au carré de la vitesse V a pour conséquence une dynamique très étendue, incompatible avec la transmission par le câble 14.

Pour réduire cette dynamique, le signal issu du bloc 40 est appliqué, après passage dans un filtre passe-bas 41, à un intégrateur 42. L'intégration ainsi réalisée aboutit à diviser l'amplitude A du signal par la fréquence f, donc par la vitesse V. L'amplitude Ac du signal après intégration est simplement proportionnelle à la vitesse V, ce qui donne une dynamique plus acceptable.

Le signal issu de l'intégrateur 42 est appliqué à un convertisseur analogique-numérique 43, et le signal numérique Sc obtenu est transmis en surface par le câble 14 par l'intermédiaire d'un bloc d'interface 44 usuel dans les dispositifs de diagraphie.

L'équipement de surface comprend un bloc d'interface 50 relié au câble 14, qui restitue le signal numérique appliqué au bloc d'interface 44 de la sonde.

L'équipement de surface comprend par ailleurs des moyens pour adresser à la sonde les signaux nécessaires à son fonctionnement et pour assurer son alimentation. Ces moyens sont classiques dans les techniques de diagraphie et il n'y a pas lieu de les décrire ici.

Le signal Sc est appliqué, après filtrage par un filtre suiveur 51, à un dispositif 52 qui extrait la fréquence f et l'amplitude Ac de la composante utile dudit signal. Le dispositif 52 est réalisé avantageusement sous la forme d'un calculateur programmé selon le principe du filtrage adaptatif en treillis. Ce principe est décrit en détail dans l'article de M. Morf et al "Recursive Least Squares Ladder Forms for Fast Parameter Tracking" IEEE Conf. Decision and Control, Jan. 1979.

Le filtre suiveur 51 est un filtre passe-haut dont la fréquence de coupure reste constamment égale à la moitié de la fréquence f. La donnée de fréquence f/2 est fournie au filtre 51 à partir du dispositif 52.

Le dispositif 52 fournit sous forme de données numériques la fréquence f et l'amplitude Ac de la composante utile du signal Sc à des mémoires 53 et 53'. Ces mémoires sont lues par un calculateur 54, qui détermine la proportion de bulles Y et le débit Q pour chaque profondeur H de la section du puits parcourue par la sonde et où l'on désire connaître les caractéristiques d'écoulement. La corrélation des données avec la profondeur est assurée par des moyens également classiques, à partir d'impulsions générées par le passage du câble sur son tambour.

Les données Q et Y ainsi fournies sont mises en mémoire dans un dispositif d'enregistrement 55, par exemple un enregistreur magnétique à bande, et appliquées à un enregistreur graphique 56 qui produit une diagraphie du débit et éventuellement de la proportion de bulles.

Le principe de calcul mis en oeuvre dans le calculateur 54 est le suivant.

Dans le cas d'un liquide ou d'un gaz, le rapport f/Q est sensiblement constant sur une large plage de débit. En présence d'un mélange gaz-liquide, un débitmètre à émission de tourbillons est utilisable si la proportion de gaz est inférieure à environ 30%. Entre 0 et environ 10%, le spectre de fréquence du signal produit par le transducteur présente une raie très nette à la fréquence f. Entre environ 10% et environ 30%, le spectre s'élargit, mais une analyse spectrale permet de définir une fréquence caractéristique. Au-delà de 30%, l'émission de tourbillons devient erratique et il n'est plus guère possible de déterminer une fréquence représentative du débit.

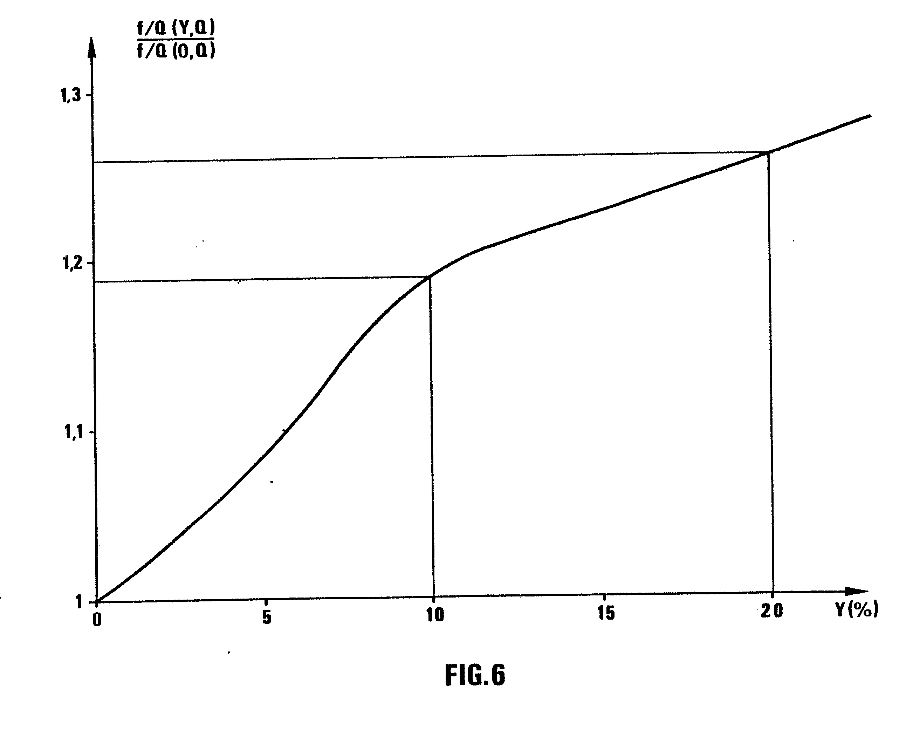

Cela étant, on a constaté que le rapport f/Q augmente quelque peu avec la proportion de bulles Y, la variation étant sensiblement indépendante du débit. La figure 6 illustre cette variation, la grandeur portée en abscisse étant la proportion de bulles Y et celle portée en ordonnée étant le quotient du rapport f/Q(Y,Q) correspondant à une proportion de bulles Y et un débit Q au rapport f/Q(0,Q) pour Y = 0 (liquide sans bulles) et le même débit Q.

A partir de la valeur 1 pour un liquide (Y = 0), on note que ce quotient vaut 1,2 pour une proportion de bulles Y de 10%, soit un accroissement de 20%, et 1,27 pour Y = 20%, soit un accroissement de 27%.

Les variations du rapport f/Q peuvent ainsi s'exprimer par :

$$f/Q = R(1 + n(Y)) \qquad (1)$$

où R est une constante égale à la valeur du rapport f/Q en l'absence de bulles, et la fonction n(Y) correspond aux variations représentées sur la figure 6 et est nulle pour Y=0.

Une détermination précise du débit de liquide Q exige donc la connaissance de la proportion de bulles Y en plus de la fréquence f.

On détermine la proportion de bulles Y à partir de l'amplitude de la composante utile du signal. Plus précisément, afin d'obtenir une grandeur affranchie des variations du débit, on forme le rapport de l'amplitude Ac (proportionnelle à la vitesse V) à la fréquence f. La valeur Ar obtenue est appelée l'amplitude réduite.

On a vu que l'amplitude A du signal issu du bloc 40 est proportionnelle à la densité moyenne d du fluide. Cette densité moyenne diminue en présence de bulles dans une mesure légèrement inférieure à la proportion de bulles Y, car la densité du gaz n'est pas tout à fait négligeable dans les conditions de pression et de température du puits. Mais on a trouvé que la diminution de l'amplitude, pour une proportion de bulles donnée Y, était très supérieure à la diminution prévisible, c'est-à-dire à la diminution de la densité moyenne du fluide, et qu'ainsi l'amplitude réduite Ar fournissait une image très amplifiée de la proportion de bulles Y et constituait un excellent indicateur des variations de Y.

Cet effet d'amplification est imputable au phénomène de piégeage des bulles de gaz dans les tourbillons. On a en effet constaté que la proportion de bulles dans les tourbillons était très supérieure à la proportion moyenne de bulles dans le fluide, le maximum étant atteint au centre des tourbillons.

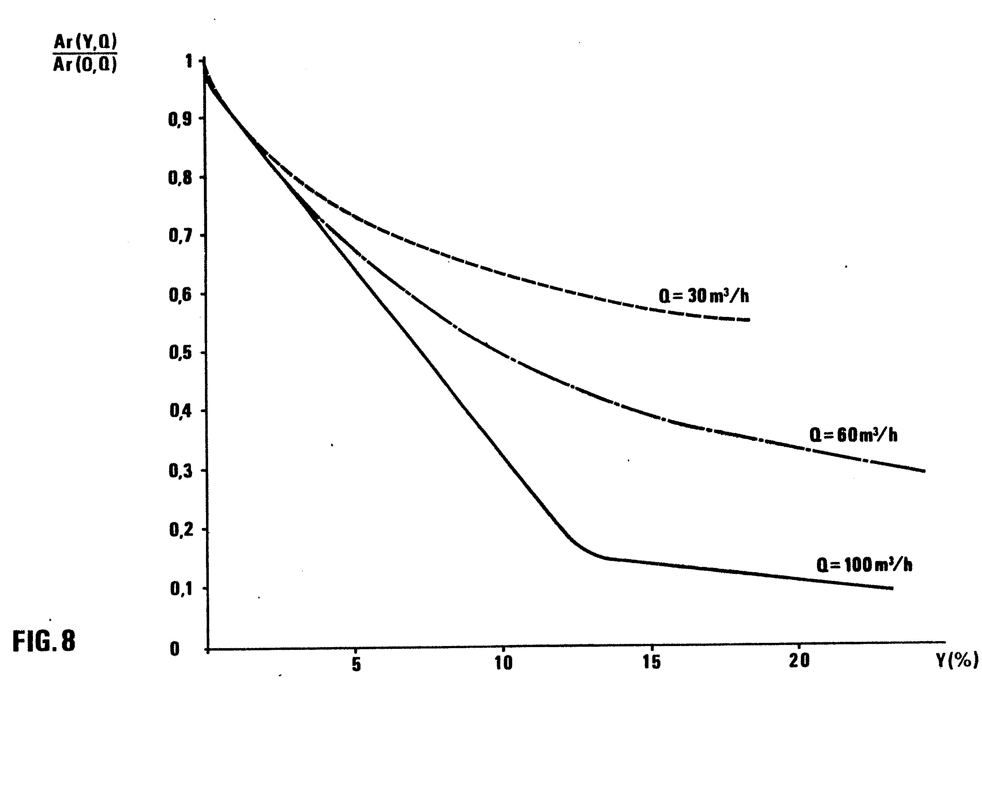

Ceci est illustré à la figure 7, où l'on a seulement représenté en coupe transversale un obstacle B placé en travers d'une conduite cylindrique C où un fluide multiphasique gaz-liquide s'écoule dans le sens indiqué par la flèche. On a mesuré la densité de bulles à l'aide d'une sonde optique dans le sillage de l'obstacle. Les tourbillons peuvent être repérés par des courbes qui correspondent chacune à une proportion donnée de gaz. La courbe centrale I correspond à la proportion la plus élevée, et les courbes II, III, IV correspondent à des proportions qui décroissent à mesure que l'on s'éloigne du centre.

A titre d'exemple, avec une proportion de bulles, mesurée en amont de l'obstacle, de 2,8%, les courbes I, II, III et IV correspondent respectivement à des proportions de 20%, 10%, 4% et 2%.

La densité locale du fluide au centre des tourbillons est donc nettement inférieure à la densité moyenne du fluide. Cela explique que l'amplitude réduite Ar, liée à la pression locale, répercute de façon très amplifiée les variations de la proportion de gaz.

Les courbes de la figure 8 illustrent la dépendance de l'amplitude réduite Ar vis-à-vis de la proportion de gaz Y. La grandeur portée en ordonnée est le rapport de l'amplitude réduite Ar(Y,Q) pour une proportion de bulles Y et un débit Q, à l'amplitude réduite Ar(0,Q) pour une proportion de bulles nulle et le même débit Q. Ce rapport est évidemment égal à 1 pour Y = 0. La courbe en trait plein correspond à un débit Q de 100 $m^3$/h, celle en trait mixte à un débit de 60 $m^3$/h et celle en trait pointillé à un débit de 30 $m^3$/h.

On observe que l'amplitude réduite Ar subit une décroissance sensiblement linéaire et indépendante du débit jusqu'à une valeur Y d'environ 2,5%. Pour cette valeur, la diminution atteint environ 20%, soit un facteur d'amplification d'environ 8.

Pour les proportions de bulles plus importantes, la décroissance de l'amplitude réduite dépend du débit. Elle est plus forte aux débits élevés : pour une proportion de bulles de 12%, elle atteint 85% à un débit de 100 $m^3$/h, mais moins de 60% à un débit de 60 $m^3$/h et un peu plus de 40% à un débit de 30 $m^3$/h.

Au-delà d'une proportion de bulles de 12%, la décroissance devient beaucoup plus lente. Ceci est dû à la saturation des tourbillons en bulles de gaz. La saturation est atteinte plus tôt aux faibles débits, ce qui explique la dépendance vis-à-vis du débit notée plus haut.

Compte tenu de ce qui précède, on peut exprimer l'amplitude réduite Ar sous la forme

$$Ar = d.\ h(Y,Q) \tag{2}$$

c'est-à-dire comme le produit de la densité moyenne d du fluide par une fonction de la proportion de bulles Y et du débit Q, h(Y,Q), à laquelle correspondent, à un facteur constant près, les courbes de la figure 8.

On a vu que dans les variations de l'amplitude réduite, le facteur prépondérant était la proportion de bulles, le rôle du débit étant secondaire.

Cela autorise une approximation consistant à remplacer la fonction $h(Y,Q)$ par un produit de deux fonctions

$$k(Y)(1 + l(Q)) \tag{3}$$

la fonction $k(Y)$ exprimant l'influence prépondérante de la proportion de bulles et la fonction $l(Q)$ définissant le facteur correctif lié au débit.

Par ailleurs, la densité moyenne d du fluide varie avec la proportion de bulles Y et vaut

$$d(Y) = d_L(1-Y) + d_G \cdot Y \tag{4}$$

où $d_L$ et $d_G$ sont respectivement les densités du liquide et du gaz à la profondeur considérée.

Le terme $d_G \cdot Y$ dans l'équation (4) peut être négligé. L'équation (2) devient alors

$$Ar = d_L \cdot (1-Y) \cdot h(Y,Q) \tag{5}$$

les courbes de la figure 8 correspondant au produit

$$(1-Y) \cdot h(Y,Q)$$

Supposons que la densité $d_L$ du liquide ne varie que de façon négligeable en fonction de la profondeur H dans le puits, et qu'il s'agit d'une donnée connue pour le puits.

L'expression (5) devient, en remplaçant $h(Y,Q)$ par le produit indiqué en (3) :

$$Ar = d_L(1-Y) \cdot k(Y)(1+l(Q)) \tag{6}$$

Si l'on appelle $m(Y)$ le produit $d_L(1-Y) \cdot k(Y)$, l'expression (6) devient :

$$Ar = m(Y)(1+l(Q)) \tag{7}$$

En utilisant la fonction $m^{-1}$, réciproque de la fonction $m(Y)$, on arrive à l'expression

$$Y = m^{-1}(Ar/(1+l(Q)) \tag{8}$$

D'autre part, compte tenu de la loi de variation du rapport $f/Q$ indiquée en (1) ci-dessus, le débit Q peut être donné par l'expression :

$$Q = f/R(1+n(Y)) \tag{9}$$

Les formules (8) et (9) permettent de calculer Q et Y par itération à partir de la fréquence f et de l'amplitude réduite Ar à la profondeur considérée.

On part d'une valeur initiale nulle pour la proportion de bulles :

$$Y_o = 0$$

14

La valeur initiale correspondante pour le débit est

$Q_o = f/R$

On calcule ensuite une première estimation $Y_1$ de la proportion de bulles au moyen de l'équation (8), en utilisant la valeur initiale $Q_o$ comme valeur du débit. On a donc

$Y_1 = m^{-1}(Ar/(1+l(Q_o)))$

On porte cette valeur $Y_1$ dans la formule (9) donnant le débit, pour obtenir une estimation $Q_1$ qui vaut

$Q_1 = f/R(1+n(Y_1))$

On poursuit l'itération à l'aide de cette valeur $Q_1$ pour obtenir de la manière décrite une valeur $Y_2$, puis une valeur $Q_2$ à partir de cette valeur $Y_2$, etc, jusqu'à la convergence.

Toutefois, étant donné que la proportion de bulles n'intervient que pour définir un facteur correctif dans la détermination du débit, on peut se satisfaire d'une valeur approximative et arrêter le calcul aux valeurs $Y_1$ et $Q_1$.

Le débit Q ainsi déterminé est le débit apparent, égal au produit de la vitesse d'écoulement apparente V "vue" par la sonde par la section d'écoulement dans le puits. Pour déterminer le débit réel Qr, il faut ajouter au débit apparent un terme correspondant à la vitesse propre de la sonde, égal au produit de cette vitesse propre Vs par la section du puits $s_p$. La section $s_p$ est une donnée connue pour le puits. Quant à la vitesse de la sonde, elle est, au moins en moyenne, égale à la vitesse d'enroulement du câble 14, qui est fixée par l'opérateur. Il s'agit donc également d'une donnée connue.

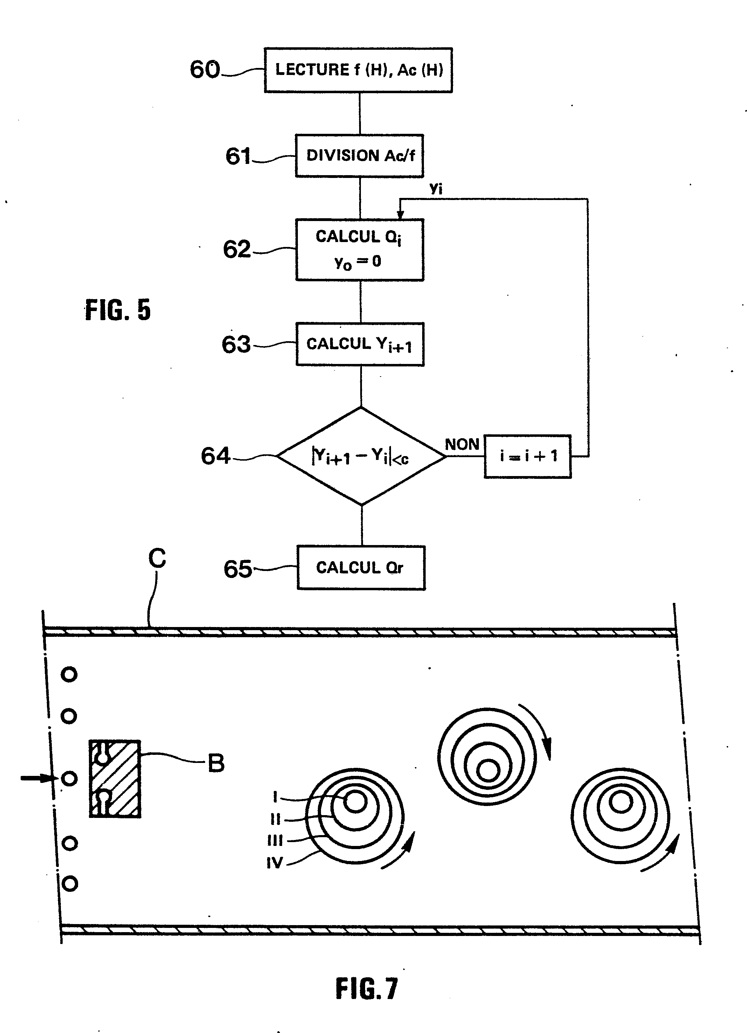

Le diagramme de la figure 5 montre les opérations effectuées par le calculateur 54 dans le cas d'un calcul itératif complet.

Les données f(H) et Ac(H) sont lues dans les mémoires tampons 53 et 53' (bloc 60). Le calculateur détermine l'amplitude réduite Ar en formant le rapport Ac/f (bloc 61).

Les blocs 62-64 correspondent au processus itératif. La valeur de débit $Q_i$ est calculée sur la base de l'équation (1) à partir de la fréquence f et de la proportion de bulles $Y_i$

résultant de l'itération précédente (bloc 62). On forme la valeur $Y_{i+1}$ en appliquant la relation (8) à partir de l'amplitude réduite Ar et du débit $Q_i$, la densité du liquide $d_L$ intervenant en tant que facteur constant (bloc 63). On compare les valeurs $Y_{i+1}$ et $Y_i$ (bloc 64). Si leur différence est inférieure à une quantité déterminée C, on considère que la convergence est atteinte. Dans le cas contraire, on poursuit l'itération.

Le bloc 65 correspond au calcul du débit réel Qr, qui est obtenu en ajoutant au débit calculé Q le terme lié au déplacement de la sonde.

Une variante de réalisation consiste à prendre en considération les variations de la densité $d_L$ du liquide avec la profondeur H. Pour cela, on mesure la densité d du fluide dans le puits au moyen d'une sonde de diagraphie telle qu'un gradiomanomètre. La mesure de densité sera avantageusement effectuée en même temps que la mesure de débit, à l'aide d'une combinaison de la sonde de densité et de la sonde de débit.

Connaissant la densité d(H) à la profondeur H, on forme le rapport Ar(H)/d(H). On obtient ainsi une amplitude normalisée An qui ne dépend plus des variations de la densité moyenne. Avec les notations précédentes, on a :

$$An = h(Y,Q) = k(Y).(1 + l(Q))$$

d'où l'on tire

$$Y = k^{-1}(An/(1 + l(Q))$$

$k^{-1}$ étant la fonction réciproque de la fonction k.

Sur la base de cette relation et de l'équation (9) précédente

$$Q = f/R(1 + n(Y))$$

le calculateur effectue un calcul par itération avec une valeur initiale $Y_0 = 0$ pour la proportion de bulles Y et fournit, une fois atteinte la convergence, des valeurs $Y_i$ et Qi.

Comme indiqué ci-dessus, on peut choisir d'arrêter le traitement à la première itération. Les valeurs obtenues sont alors des estimations $Y_1$ et $Q_1$ définies comme suit :

$$Y_1 = k^{-1}(An/(1 + 1(Q_o))) \quad \text{avec } Q_o = f/R$$

$$Q_1 = f/R(1 + n(Y_1))$$

Les signaux représentatifs de la densité d(H) seront enregistrés dans une autre mémoire et lus par le calculateur en même temps que les données de fréquence et d'amplitude enregistrées dans les mémoires 53 et 53' et correspondant à la même profondeur H.

L'invention n'est pas limitée aux formes de réalisation décrites. Ainsi, au lieu de former le rapport Ac/f pour obtenir l'amplitude réduite Ar, on pourrait procéder à une seconde intégration du signal dans l'équipement de surface.

D'autre part, bien qu'ils soient décrits ci-dessus comme des éléments distincts, les éléments 51-54 de l'équipement de surface peuvent être réalisés en un ensemble calculateur unique.

REVENDICATIONS

1. Procédé pour mesurer le débit d'un fluide s'écoulant dans un puits, dans lequel on descend dans un puits une sonde de diagraphie comprenant au moins un obstacle générateur d'allées de tourbillons et un transducteur sensible aux variations de pression dues à l'émission de tourbillons, ce transducteur produisant, pour chaque profondeur dans le puits, un signal de détection dont la composante utile a une fréquence f reliée linéairement au débit et une amplitude A, et on dérive de ce signal de détection un premier signal indicatif de la fréquence f, caractérisé par le fait qu'on dérive du signal de détection un second signal indicatif de l'amplitude réduite Ar, définie comme le rapport $A/f^2$, et on forme une fonction de la fréquence f et de l'amplitude réduite Ar, indicative du débit, sur la base d'une première relation exprimant la fréquence f en fonction du débit et de la proportion de bulles dans le fluide à la profondeur considérée et incluant la dite relation linéaire fréquence/débit, et d'une deuxième relation définissant la dépendance de l'amplitude réduite vis-à-vis de la proportion de bulles et du débit.

2. Procédé selon la revendication 1, caractérisé par le fait que la dite deuxième relation exprime l'amplitude réduite comme le produit d'une fonction de la proportion de bulles par un terme correctif dépendant du débit.

3. Procédé selon la revendication 2, caractérisé par le fait que la dite fonction indicative du débit est obtenue par un processus itératif qui comprend les opérations suivantes :
        - sur la base de la première relation, on calcule une valeur initiale de débit correspondant à une valeur initiale nulle pour la proportion de bulles;

- on détermine une estimation de la proportion de bulles sur la base de la deuxième relation, avec la dite valeur initiale en tant que valeur du débit;

- on calcule une estimation du débit sur la base de la première relation, à partir de la fréquence f et de la dite estimation de la proportion de bulles.

4. Procédé selon la revendication 3, caractérisé par le fait que le processus itératif est poursuivi jusqu'à la convergence.

5. Procédé selon l'une des revendications 1 à 4, caractérisé par le fait que, la dite deuxième relation incluant une relation proportionnelle entre l'amplitude réduite et la densité du fluide à la profondeur considérée, on produit en outre, au moyen d'une sonde de diagraphie, un signal indicatif de la densité du fluide, on forme le rapport de l'amplitude réduite à la densité à la dite profondeur et on forme la dite fonction indicative du débit à partir de ce rapport et de la fréquence f.

6. Procédé selon l'une des revendications 1 à 5, caractérisé par le fait que le second signal indicatif de l'amplitude réduite est obtenu en intégrant le signal de détection issu du transducteur, en formant un signal indicatif de l'amplitude du signal ainsi intégré et en divisant ce signal par le signal indicatif de la fréquence f.

7. Procédé pour déterminer la proportion de bulles dans le fluide s'écoulant dans un puits, caractérisé par le fait que l'on descend dans un puits une sonde de diagraphie comprenant au moins un obstacle générateur d'allées de tourbillons et un transducteur sensible aux variations de pression dues à l'émission de tourbillons, ce transducteur produisant, pour chaque profondeur dans le puits, un signal de détection dont la composante utile a une fréquence f reliée linéairement au débit et une amplitude A, on dérive de ce signal de détection un premier signal indicatif de la fréquence f et un second signal indicatif de l'amplitude réduite Ar, définie comme le rapport $A/f^2$, et on forme une fonction de la fréquence f et de l'amplitude réduite Ar indicative de la proportion de bulles sur la base d'une première relation définissant la dépendance de la relation linéaire entre la fréquence et le débit vis-à-vis de la proportion de bulles dans le fluide à la profondeur considérée, et d'une deuxième relation définissant la dépendance de l'amplitude réduite vis-à-vis de la proportion de bulles et du débit.

8. Procédé selon la revendication 7 pour déterminer une estimation de la proportion de bulles, caractérisé par le fait que l'on calcule sur la base de la première relation une valeur initiale de débit correspondant à une proportion de bulles nulle, et on calcule une estimation de la proportion de bulles sur la base de la deuxième relation à partir de la dite valeur initiale de débit.

9. Dispositif de diagraphie pour déterminer le débit du fluide s'écoulant dans un puits, comprenant une sonde de diagraphie comprenant au moins un obstacle générateur d'allées de tourbillons et un transducteur sensible aux variations de pression dues à l'émission de tourbillons, ce transducteur produisant, pour chaque profondeur dans le puits, un signal de détection dont la composante utile a une fréquence f reliée linéairement au débit et une amplitude A, un câble de transmission auquel est reliée la sonde, et des moyens de traitement reliés au câble pour déterminer le débit à partir du signal de détection, lesquels moyens comprennent un moyen pour dériver du signal de détection un signal indicatif de la fréquence f, caractérisé par le fait que les dits moyens comprennent en outre un moyen pour dériver du signal de détection un second signal indicatif de l'amplitude réduite, définie comme le rapport $A/f^2$, et un moyen pour former une fonction de la fréquence f et de l'amplitude réduite Ar, indicative de la proportion de bulles, sur la base d'une première relation définissant la dépendance de la relation linéaire entre la fréquence et le débit vis-à-vis de la proportion de bulles dans le fluide à la profondeur considérée, et d'une deuxième relation définissant la dépendance de l'amplitude réduite vis-à-vis de la proportion de bulles et du débit.

**FIG.1**

**FIG.2**

**FIG.3**

2/5

0069008

FIG. 4

**FIG. 5**

60 — LECTURE f (H), Ac (H)

61 — DIVISION Ac/f

62 — CALCUL $Q_i$
$y_o = 0$

$y_i$

63 — CALCUL $Y_{i+1}$

64 — $|Y_{i+1} - Y_i| < c$   NON   $i = i + 1$

65 — CALCUL $Q_r$

**FIG.7**

FIG.6

FIG. 8

Office européen
des brevets

**RAPPORT DE RECHERCHE EUROPEENNE**

Numéro de la demande

EP 82 40 1142

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-3 709 034 (P.Y. HERZL)<br>* abrégé; figure 1; colonne 5, lignes 42-67 * | 1 | G 01 F 1/32<br>G 01 N 9/32 |
| Y | US-A-3 719 073 (R.F. MAHON)<br>* abrégé; colonne 4, lignes 44-61 * | 1,2 | |
| A | US-A-4 164 143 (R.A. ANDERSON)<br>* abrégé; figure 2; colonne 4, lignes 1-19; figure 3 * | 1 | |
| P | EP-A-0 055 169 (SOC. DE PROSP. EL. SCHLUMBERGER)<br>* figures * | 1 | |
| A | US-A-4 169 376 (P.Y. HERZL)<br>* abrégé * | 1 | DOMAINES TECHNIQUES RECHERCHES (Int. Cl. ³)<br><br>G 01 F |

Le présent rapport de recherche a été établi pour toutes les revendications

| Lieu de la recherche | Date d'achevement de la recherche | Examinateur |
|---|---|---|
| LA HAYE | 13-10-1982 | NUIJTEN E.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : theorie ou principe à la base de l'invention
E : document de brevet antérieur, mais publié à la date de dépôt ou après cette date
D : cite dans la demande
L : cité pour d'autres raisons

& · membre de la même famille, document correspondant